(19) Europäisches Patentamt
European Patent Office
Office européen des brevets

(11) EP 4 692 253 A1

(12) EUROPEAN PATENT APPLICATION
published in accordance with Art. 153(4) EPC

(43) Date of publication:
**11.02.2026 Bulletin 2026/07**

(21) Application number: **24779310.2**

(22) Date of filing: **08.03.2024**

(51) International Patent Classification (IPC):
***C09D 11/322*** *(2014.01)* ***B41J 2/01*** *(2006.01)*
***B41M 5/00*** *(2006.01)*

(52) Cooperative Patent Classification (CPC):
**B41J 2/01; B41M 5/00; C09D 11/322**

(86) International application number:
**PCT/JP2024/009133**

(87) International publication number:
**WO 2024/203179 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059326**

(71) Applicant: **FUJIFILM Corporation**
**Tokyo 106-8620 (JP)**

(72) Inventors:
- **MIZOE, Taiga**
**Ashigarakami-gun, Kanagawa 258-8577 (JP)**
- **SAKAKIBARA, Masato**
**Ashigarakami-gun, Kanagawa 258-8577 (JP)**
- **IKOSHI, Masao**
**Ashigarakami-gun, Kanagawa 258-8577 (JP)**
- **SUZUKI, Shota**
**Ashigarakami-gun, Kanagawa 258-8577 (JP)**

(74) Representative: **Klunker IP Patentanwälte PartG mbB**
**Destouchesstraße 68**
**80796 München (DE)**

# (54) INKJET INK AND IMAGE-RECORDING METHOD

(57) Provided are an ink jet ink containing water, a solvent A having a ClogP value of -0.5 or more, a solvent B having a ClogP value of less than -0.5, resin particles, a pigment, and a crosslinked pigment dispersion resin obtained by crosslinking a pigment dispersion resin having a ClogP value of 3.2 or more, in which, in a case where an absolute value of a difference between the ClogP value of the solvent A and -0.5 is denoted by D(A), an absolute value of a difference between the ClogP value of the solvent B and -0.5 is denoted by D(B), a content of the solvent A is denoted by S(A) (% by mass), and a content of the solvent B is denoted by S(B) (% by mass), "-1.5D(A) + 9 > S(A) > -2D(A) + 8", "45D(B) + 8 > S(B) > 20D(B) + 8", and "S(A)/S(B) > 0.25" are satisfied; and an image recording method.

EP 4 692 253 A1

## Description

BACKGROUND OF THE INVENTION

1. Field of the Invention

The present disclosure relates to an inkjet ink and an image recording method.

2. Description of the Related Art

In the related art, various studies have been conducted on an ink jet ink (that is, an ink for ink jet recording) and an image recording method using the ink jet ink.

For example, JP2009-19198A discloses the following ink for ink jet recording, as an ink for ink jet recording which is excellent in image quality and high-speed printing compatibility with respect to plain paper and has favorable storage stability and jetting stability.

The ink for ink jet recording disclosed in JP2009-19198A is an ink for ink jet recording, containing at least a colorant dispersed in water, a water-soluble organic solvent (wetting agent), a surfactant, a permeating agent, a water-dispersible resin, and water as main components, in which, in a case where the ink is stored in an environment condition of a temperature of 50°C and a humidity of 12% for 24 hours, a solvent evaporation rate in the ink is 50 wt% or more, an ink residue viscosity is 20,000 mPa·s or more, a moisture content in the ink residue is 30 to 40 wt% in a case where the ink residue is stored in an environment condition of a temperature of 23°C and a humidity of 95% for 6 hours to absorb the moisture, and a viscosity exhibited in the case is less than 500 mPa·s.

SUMMARY OF THE INVENTION

However, in a case where a formulation of the ink jet ink (for example, the type of solvent) is set to a formulation intended for improving image quality to be recorded, continuous jetting property and storage stability of the ink jet ink may be deteriorated.

Therefore, an object of an embodiment of the present disclosure is to provide an ink jet ink capable of recording an image with excellent image quality and having excellent continuous jetting property and storage stability, and an image recording method using the ink jet ink.

The present disclosure includes the following aspects.

<1> An ink jet ink comprising:

water;
an organic solvent A having a ClogP value of -0.5 or more;
an organic solvent B having a ClogP value of less than -0.5;
resin particles;
a pigment; and
a crosslinked pigment dispersion resin obtained by crosslinking a pigment dispersion resin having a ClogP value of 3.2 or more,
in which, in a case where

an absolute value of a difference between the ClogP value of the organic solvent A and -0.5 is denoted by D(A),
an absolute value of a difference between the ClogP value of the organic solvent B and -0.5 is denoted by D(B),
a content of the organic solvent A with respect to a total amount of the ink jet ink in units of % by mass is denoted by S(A), and
a content of the organic solvent B with respect to the total amount of the ink jet ink in units of % by mass is denoted by S(B),

the following expression (1), expression (2), and expression (3) are satisfied,

$$\text{the expression (1): } -1.5D(A) + 9 > S(A) > -2D(A) + 8,$$

$$\text{the expression (2): } 45D(B) + 8 > S(B) > 20D(B) + 8,$$

$$\text{the expression (3): } S(A)/S(B) > 0.25.$$

<2> The ink jet ink according to <1>, further comprising:
a silicone-based surfactant.
<3> The ink jet ink according to <1> or <2>,
in which the pigment includes a quinacridone pigment.
<4> The ink jet ink according to any one of <1> to <3>,
in which the resin particles include acrylic resin particles.
<5> The ink jet ink according to any one of <1> to <4>,
in which the pigment dispersion resin is a resin in which at least a part of acid groups in an acid group-containing resin having an acid value of 200 mgKOH/g to 350 mgKOH/g is neutralized.
<6> An image recording method comprising:
a step of applying the ink jet ink according to any one of <1> to <5> onto a recording medium by an ink jet method to record an image.

According to the embodiment of the present disclosure, there are provided an ink jet ink capable of recording an image with excellent image quality and having excellent continuous jetting property and storage stability, and an image recording method using the ink jet ink.

DESCRIPTION OF THE PREFERRED EMBODIMENTS

In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present specification, in a case where a plurality of substances corresponding to each component in a composition is present, the amount of each component in the composition means the total amount of the plurality of substances present in the composition, unless otherwise specified.
In the present specification, a combination of two or more preferred aspects is a more preferred aspect.
In the present specification, the meaning of the term "step" includes not only an independent step but also a step whose intended purpose is achieved even in a case in which the step is not clearly distinguished from other steps.
In the present specification, "(meth)acrylate" is a concept including both acrylate and methacrylate. In addition, "(meth)acryl" is a concept that includes both acryl and methacryl.
In the present disclosure, unless otherwise specified, even in a case where an element is expressed in a singular form, a plurality of elements are not excluded unless a technical contradiction occurs.

[Ink jet ink]

The ink jet ink (hereinafter, also simply referred to as "ink") according to the present disclosure contains water, an organic solvent A having a ClogP value of -0.5 or more, an organic solvent B having a ClogP value of less than -0.5, resin particles, a pigment, and a crosslinked pigment dispersion resin obtained by crosslinking a pigment dispersion resin having a ClogP value of 3.2 or more, in which, in a case where an absolute value of a difference between the ClogP value of the organic solvent A and -0.5 is denoted by D(A), an absolute value of a difference between the ClogP value of the organic solvent B and -0.5 is denoted by D(B), a content of the organic solvent A with respect to a total amount of the ink jet ink in units of % by mass is denoted by S(A), and a content of the organic solvent B with respect to the total amount of the ink jet ink in units of % by mass is denoted by S(B), the following expression (1), expression (2), and expression (3) are satisfied.

$$\text{Expression (1): } -1.5D(A) + 9 > S(A) > -2D(A) + 8$$

$$\text{Expression (2): } 45D(B) + 8 > S(B) > 20D(B) + 8$$

$$\text{Expression (3): } S(A)/S(B) > 0.25$$

The ink according to the present disclosure is an ink with which an image capable of recording an image with excellent image quality and having excellent continuous jetting property and storage stability.
Here, the image quality means that graininess (roughness) is suppressed.
The reason why these effects are exhibited is presumed as follows.
As a result of studies by the present inventors, it is found that, in order to improve the image quality (that is, to suppress the roughness) of an image recorded using an aqueous ink containing water, a pigment, a pigment dispersion resin, and resin particles, it is effective to deliberately contain a hydrophobic organic solvent (specifically, the above-described organic solvent A) in the aqueous ink.
However, as a result of further studies, it is also found that, in a case where the aqueous ink contains the above-described organic solvent A, the continuous jetting property and/or the storage stability of the ink may be deteriorated.
The reason for this is considered to be that, in a case where the aqueous ink contains the above-described organic solvent A, the pigment dispersion resin adsorbed on the surface of the pigment is peeled off from the surface of the pigment, and as a result, dispersion stability of the pigment is decreased.
Therefore, as a result of further studies, it is found that, by using a crosslinked pigment dispersion resin obtained by crosslinking a pigment dispersion resin having a ClogP value of 3.2 or more, it is possible to suppress deterioration in continuous jetting property and storage stability of the ink even though the ink is an aqueous ink containing the above-described organic solvent A.
Furthermore, it is found that the image quality of an image recorded using the aqueous ink is further improved by containing, in addition to the organic solvent A, the above-described organic solvent B which has lower hydrophobicity (that is, higher hydrophilicity) than the organic solvent A, limiting the content of the organic solvent A (that is, the S(A)) within a range satisfying the expression (1), limiting the content of the organic solvent B (that is, the S(B)) within a range satisfying the expression (2), and limiting the S(A)/S(B) ratio to be more than 0.25 (see the expression (3)).
The ink according to the present disclosure is obtained based on these findings.
Hereinafter, the ink according to the present disclosure will be described in more detail.

<Water>

The ink according to the present disclosure contains water.
A content of the water with respect to the total amount of the ink is preferably 30% by mass or more, more preferably 40% by mass or more, still more preferably 50% by mass or more, and even more preferably 60% by mass or more.
The upper limit value of the content of the water with respect to the total amount of the ink is, for example, 90% by mass, 80% by mass, or the like.

<Organic solvent A>

The ink according to the present disclosure contains at least one organic solvent A.
The organic solvent A in the present disclosure is an organic solvent having a ClogP value of -0.5 or more.
The organic solvent A is an organic solvent having a higher hydrophobicity than the organic solvent B (organic solvent having a ClogP value of less than -0.5).
The organic solvent A is a component which contributes to the improvement of the image quality of the image.
In the present disclosure, the Clog P value is a value indicating a degree of hydrophobicity.
As the ClogP is larger, the hydrophobicity is higher.
The ClogP value can be determined from a chemical structural formula.
In the present disclosure, ClogP means a value calculated using ChemDraw (registered trademark) Professional (ver. 20.1.1.125) (manufactured by PerkinElmer Inc.).
As the organic solvent A, among organic solvents having a ClogP value of -0.5 or more, an organic solvent having 6 or more carbon atoms is more preferable, an organic solvent having 6 to 10 carbon atoms is still more preferable, and a glycol ether having 6 to 10 carbon atoms is even more preferable.
A preferred range of the ClogP value of the organic solvent A is -0.5 to 2.0, and a more preferred range thereof is -0.4 to 1.9.
Examples of the organic solvent A include: ethylene glycol monoalkyl ethers such as ethylene glycol monopentyl ether, ethylene glycol monohexyl ether (EGmHE), ethylene glycol monoheptyl ether, ethylene glycol monooctyl ether, ethylene glycol mononony1 ether, and ethylene glycol mono-2-ethylhexyl ether;

diethylene glycol monoalkyl ethers such as diethylene glycol monomethyl ether, diethylene glycol monoethyl ether

(DEGmEE), diethylene glycol monopropyl ether, diethylene glycol monobutyl ether, diethylene glycol monopentyl ether, diethylene glycol monohexyl ether, diethylene glycol monoheptyl ether, diethylene glycol monoctyl ether, diethylene glycol monononyl ether, and diethylene glycol mono-2-ethylhexyl ether;

triethylene glycol monoalkyl ethers such as triethylene glycol monopentyl ether, triethylene glycol monohexyl ether, triethylene glycol monoheptyl ether, triethylene glycol monooctyl ether, triethylene glycol monononyl ether, and triethylene glycol mono-2-ethylhexyl ether;

propylene glycol monoalkyl ethers such as propylene glycol monobutyl ether, propylene glycol monopentyl ether, propylene glycol monohexyl ether, propylene glycol monoheptyl ether, propylene glycol monooctyl ether, and propylene glycol mono-2-ethylhexyl ether;

dipropylene glycol monoalkyl ethers such as dipropylene glycol monobutyl ether, dipropylene glycol monopentyl ether, dipropylene glycol monohexyl ether, dipropylene glycol monoheptyl ether, dipropylene glycol monooctyl ether, and dipropylene glycol mono-2-ethylhexyl ether;

tripropylene glycol monoalkyl ethers such as tripropylene glycol monomethyl ether (TPGmME), tripropylene glycol monoethyl ether, tripropylene glycol monopropyl ether, tripropylene glycol monobutyl ether, tripropylene glycol monopentyl ether, tripropylene glycol monohexyl ether, tripropylene glycol monoheptyl ether, tripropylene glycol monoctyl ether, and tripropylene glycol mono-2-ethylhexyl ether; and

alkanediols such as 1,2-heptanediol, 1,2-octanediol, 1,2-nonanediol, 1,2-decanediol, and 3-methyl-1,3-butanediol (3M1,3-BD).

(Content (% by mass) of organic solvent A ("S(A)"))

The content (% by mass) of the organic solvent A with respect to the total amount of the ink ("S(A)") is within a range satisfying the expression (1).

In the expression (1), D(A) means an absolute value of a difference between the ClogP value of the organic solvent A and -0.5.

$$\text{Expression (1): } -1.5D(A) + 9 > S(A) > -2D(A) + 8$$

The expression (1) is an expression that defines an upper limit and a lower limit of the content (% by mass) of the organic solvent A according to the absolute value of the difference between the ClogP value of the organic solvent A and -0.5 (that is, a degree of deviation of the ClogP value of the organic solvent A from the ClogP value of -0.5, which is a boundary between the organic solvent A and the organic solvent B).

For example, as the absolute value of the difference between the ClogP value of the organic solvent A and -0.5 is larger, the function of the organic solvent A is stronger, so that the content (% by mass) of the organic solvent A can be set to be smaller. The expression (1) shows this tendency.

The inequality "S(A) > -2D(A) + 8" on the right side of the expression (1) corresponds to the lower limit of the content of the organic solvent A, and the function (particularly, the improvement in image quality) of the organic solvent A is exhibited by satisfying "S(A) > -2D(A) + 8".

The inequality "-1.5D(A) + 9 > S(A)" on the left side of the expression (1) corresponds to the upper limit of the content of the organic solvent A, and the function (particularly, the improvement in image quality) of the organic solvent A is exhibited by satisfying "-1.5D(A) + 9 > S(A)".

In a case where the ink contains two or more kinds of the organic solvents A, the S(A) is the total amount of the two or more kinds of the organic solvents A.

In a case where the ink contains two or more kinds of the organic solvents A, the D(A) is an absolute value of a difference between a weighted average value of individual ClogP values of the two or more kinds of the organic solvents A and -0.5.

The D(A) and S(A) are not particularly limited as long as they satisfy the expression (1).

Here, the S(A) is a value more than 0, and the D(A) is a value at which the S(A) is a value more than 0.

The S(A) (% by mass) is, for example, 4.0 to 9.0, preferably 5.0 to 8.0.

The D(A) is, for example, 0.0 to 2.0, preferably 0.67 to 1.5.

<Organic solvent B>

The ink according to the present disclosure contains at least one organic solvent B.

The organic solvent B in the present disclosure is an organic solvent having a ClogP value of less than -0.5.

The organic solvent B is an organic solvent having a lower hydrophobicity (that is, a higher hydrophilicity) than the organic solvent A (the organic solvent having a ClogP value of -0.5 or more).

The organic solvent B is a component for further improving the image quality of the image by being mixed with the organic solvent A in the aqueous ink.

As the organic solvent B, among organic solvents having a ClogP value of less than -0.5, an organic solvent having 6 or less carbon atoms is preferable, an organic solvent having 5 or less carbon atoms is more preferable, and an organic solvent having 4 or less carbon atoms is still more preferable. A preferred range of the ClogP value of the organic solvent B is -1.6 to -0.5, and a more preferred range thereof is -1.4 to -0.7.

Examples of the organic solvent B include propylene glycol (hereinafter, also referred to as "PG"; ClogP value = -1.06), glycerin (hereinafter, also referred to as "GL"; ClogP value = -1.54), 1,3-butanediol (hereinafter, referred to as "1,3-BD"; ClogP value = -0.72), triethylene glycol (hereinafter, referred to as "TEG"; ClogP value = -1.48), and 2-pyrrolidone (ClogP value = -0.97).

(Content (% by mass) of organic solvent B ("S(B)"))

The content (% by mass) of the organic solvent B with respect to the total amount of the ink ("S(B)") is within a range satisfying the expression (2).

In the expression (2), D(B) means an absolute value of a difference between the ClogP value of the organic solvent B and -0.5.

$$\text{Expression (2): } 45D(B) + 8 > S(B) > 20D(B) + 8$$

The expression (2) is an expression that defines an upper limit and a lower limit of the content (% by mass) of the organic solvent B according to the absolute value of the difference between the ClogP value of the organic solvent B and -0.5 (that is, a degree of deviation of the ClogP value of the organic solvent B from the ClogP value of -0.5, which is a boundary between the organic solvent A and the organic solvent B).

The inequality "S(B) > 20D(B) + 8" on the right side of the expression (2) corresponds to the lower limit of the content of the organic solvent B, and the function (particularly, the improvement in image quality) of the organic solvent B is exhibited by satisfying "S(B) > 20D(B) + 8".

The inequality "45D(B) + 8" on the left side of the expression (2) corresponds to the upper limit of the content of the organic solvent B, and the image quality is improved (that is, the roughness is suppressed) by satisfying "45D(B) + 8".

In a case where the ink contains two or more kinds of the organic solvents B, the S(B) is the total amount of the two or more kinds of the organic solvents B.

In a case where the ink contains two or more kinds of the organic solvents B, the D(B) is an absolute value of a difference between a weighted average value of individual ClogP values of the two or more kinds of the organic solvents B and -0.5.

The D(B) and S(B) are not particularly limited as long as they satisfy the expression (2).

The S(B) (% by mass) is, for example, 10.0 to 35.0, preferably 15.0 to 30.0.

The D(B) is, for example, 0.04 to 1.35, preferably 0.16 to 1.10.

<S(A)/S(B)>

S(A) and S(B) satisfy the expression (3) ("S(A)/S(B) > 0.25"). That is, S(A)/S(B) is more than 0.25. As a result, the effect of improving the image quality of the image is obtained.

From the viewpoint of improving the image quality of the image, the upper limit of S(A)/S(B) is preferably 0.50 and more preferably 0.45.

<Resin particles>

The ink according to the present disclosure contains at least one kind of resin particles.

The resin particles contribute to film-forming properties, that is, film (image) forming properties.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.
In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).
It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.
The resin particles preferably include acrylic resin particles.
In this manner, the image quality of the image and the continuous jetting property of the ink are further improved.
A glass transition temperature (Tg) of the resin particles is preferably 50°C to 250°C and more preferably 50°C to 150°C.
Here, a measurement Tg obtained by actual measurement is employed as the glass transition temperature (Tg) of the resin particles. A method of measuring the measurement Tg can refer to paragraph 0111 of JP2015-25076A.
For the resin particles, for example, descriptions described in paragraphs 0038 to 0114 of WO2021/192720A and paragraphs 0109 to 0120 of JP2015-25076A may be referred to.
A content of the resin particles in the ink according to the present disclosure is preferably 0.1% by mass to 10% by mass and more preferably 0.2% by mass to 5.0% by mass with respect to the total amount of the ink.

<Pigment>

The ink according to the present disclosure contains at least one pigment.
The pigment is not particularly limited, and may be an organic pigment or an inorganic pigment.
Examples of the pigment include pigments described in "Encyclopedia of Pigments" edited by Seishiro Ito (2000), "Industrial Organic Pigments", W. Herbst, K. Hunger, and pigments described in known documents such as JP2002-12607A, JP2002-188025A, JP2003-26978A, JP2003-342503A, and JP2015-193729A.
Examples of the pigment include polycyclic pigments such as an azolake pigment, an azo pigment, a phthalocyanine pigment, a perylene pigment, a perinone pigment, an anthraquinone pigment, a quinacridone pigment, a dioxazine pigment, a diketopyrrolopyrrole pigment, a thioindigo pigment, an isoindolinone pigment, and a quinophthalone pigment; organic pigments such as a nitro pigment, a nitroso pigment, aniline black, and a daylight fluorescent pigment; and inorganic pigments such as titanium oxide, iron oxide, and carbon black.
As the pigment, an azo pigment, a phthalocyanine pigment, an anthraquinone pigment, a quinacridone pigment, or a carbon black pigment is preferable.
With regard to the pigment, the description in a known reference such as JP5404669B may be appropriately referred to.
From the viewpoint of further improving the continuous jetting property and the storage stability of the ink, it is preferable that the pigment includes a quinacridone pigment.
A content of the pigment is preferably 1% by mass to 30% by mass, more preferably 1.5% by mass to 20% by mass, still more preferably 2% by mass to 15% by mass, and even more preferably 2% by mass to 10% by mass with respect to the total amount of the ink.

<Crosslinked pigment dispersion resin obtained by crosslinking pigment dispersion resin having ClogP value of 3.2 or more>

The ink according to the present disclosure contains at least one crosslinked pigment dispersion resin obtained by crosslinking a pigment dispersion resin having a ClogP value of 3.2 or more.
The crosslinked pigment dispersion resin contributes to the continuous jetting property and the storage stability of the ink.
In the present disclosure, the pigment dispersion resin is a resin having a function of dispersing a pigment.
In a case where an ink containing water and a pigment contains the pigment dispersion resin, it is considered that the pigment is dispersed in the ink in a state in which the pigment dispersion resin is adsorbed on a surface of the pigment in the ink.
In the present disclosure, the crosslinked pigment dispersion resin means a resin obtained by crosslinking the pigment dispersion resin.
In other words, the crosslinked pigment dispersion resin is a pigment dispersion resin having a crosslinking structure.
In the ink according to the present disclosure, since the pigment dispersion resin has a crosslinking structure (that

is, is the crosslinked pigment dispersion resin), the pigment dispersion resin adsorbed on the surface of the pigment is less likely to be peeled off from the surface of the pigment, and thus dispersion stability of the pigment in the ink is favorably maintained, which contributes to the continuous jetting property and the storage stability of the ink.

The improvement of the continuous jetting property and the storage stability of the ink is also contributed by the ClogP value of the pigment dispersion resin, before the crosslinking structure is formed in the crosslinked pigment dispersion resin, being 3.2 or more.

The reason for this is considered to be that, since hydrophobicity of the pigment dispersion resin is high to some extent, hydrophobicity of the crosslinked pigment dispersion resin obtained by crosslinking the pigment dispersion resin is also high to some extent, and as a result, in the aqueous ink, the crosslinked pigment dispersion resin is likely to remain on the surface of the pigment due to a hydrophobic interaction with the pigment, and thus an adsorption state of the crosslinked pigment dispersion resin on the surface of the pigment is likely to be maintained.

In the present disclosure, the ClogP value of the pigment dispersion resin is calculated based on a ClogP value of a monomer corresponding to each structural unit in the pigment dispersion resin.

Specifically, in the present disclosure, in a case where the pigment dispersion resin is a homopolymer, the ClogP value of the pigment dispersion resin is equal to a ClogP value of a monomer for forming the homopolymer. For example, a ClogP value of the pigment dispersion resin which is a polyacrylic acid is equal to a ClogP value of acrylic acid.

In addition, in the present disclosure, in a case where the pigment dispersion resin is a copolymer, the ClogP value of the pigment dispersion resin is calculated by weight-averaging of ClogP values of monomers corresponding to the respective structural units according to a copolymerization mass ratio. For example, in a case where the pigment dispersion resin is a ternary copolymer of methyl methacrylate-methacrylic acid-sodium methacrylate (copolymer mass ratio [methyl methacrylate:methacrylic acid:sodium methacrylate] = 50:30:20), the total value of a value obtained by multiplying a ClogP value of the methyl methacrylate by 0.5, a value obtained by multiplying a ClogP value of the methacrylic acid by 0.3, and a value obtained by multiplying a ClogP value of sodium methacrylate by 0.2 is used as the ClogP value of the pigment dispersion resin.

It is preferable that both the pigment dispersion resin and the crosslinked pigment dispersion resin contain a structural unit represented by Formula (1) (hereinafter, also referred to as "unit of Formula (1)") and a structural unit represented by Formula (2) (hereinafter, also referred to as "unit of Formula (2)").

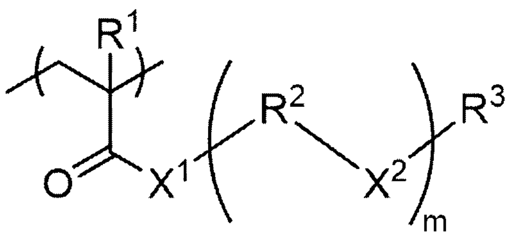 (1)

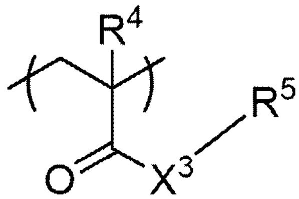 (2)

In Formula (1),

$R^1$ represents a hydrogen atom or an alkyl group having 1 to 4 carbon atoms,
$R^2$ represents an alkylene group having 2 to 5 carbon atoms,
$R^3$ represents an aromatic group,
$X^1$ and $X^2$ each independently represent -O- or -NH-, and
m represents an integer of 2 or more.

In Formula (2),

$R^4$ represents a hydrogen atom or an alkyl group having 1 to 4 carbon atoms,
$R^5$ represents an alkyl group having 8 or more carbon atoms, and
$X^3$ represents -O- or -NH-.

In a case where both the pigment dispersion resin and the crosslinked pigment dispersion resin contain the unit of Formula (1) and the unit of Formula (2), the continuous jetting property and the storage stability of the ink are further improved.

The reason for this is presumed as follows.

In the ink according to the present disclosure, it is considered that the pigment is dispersed in a state in which the crosslinked pigment dispersion resin is adsorbed on the surface of the pigment.

It is considered that the crosslinked pigment dispersion resin is adsorbed to the pigment with the aromatic group

represented by $R^3$ in the unit of Formula (1) as an adsorbing group.

The crosslinked pigment dispersion resin has a crosslinking structure. In this manner, it is considered that, as described above, the release of the pigment dispersion resin from the surface of the pigment is suppressed, and as a result, the decrease in dispersion stability of the pigment due to the release is suppressed.

m in Formula (1) is an integer of 2 or more. That is, a preferred aspect of the pigment dispersion resin (or the crosslinked pigment dispersion resin; the same applies hereinafter) contains the unit of Formula (1) in which a repetition number of "$-R^2-X^2-$" structure (for example, an alkyleneoxy structure) is 2 or more. In this manner, it is considered that affinity of the pigment dispersion resin to water is improved, and as a result, a phenomenon in which the pigment dispersion resins are aggregated in a stringing manner (random coil) in an aqueous pigment dispersion is suppressed. Accordingly, it is considered that the pigment dispersion resin is easily adsorbed to the pigment by the aromatic group represented by $R^3$ in the unit of Formula (1) as an adsorbing group, and thus the dispersion stability of the pigment (that is, temporal stability of the pigment dispersion) is improved.

$R^5$ in Formula (2) is an alkyl group having 8 or more carbon atoms. That is, a preferred aspect of the pigment dispersion resin contains the unit of Formula (2) including an alkyl group ($R^5$) having 8 or more carbon atoms, which is a hydrophobic group. In this manner, it is considered that excessive increase in the hydrophilicity of the entire pigment dispersion resin is suppressed, and as a result, the decrease in the dispersion stability of the pigment (that is, the decrease in the temporal stability of the pigment dispersion) is suppressed.

As described above, it is considered that, according to the pigment dispersion resin of the preferred aspect, the action of the crosslinking structure, the action of the unit of Formula (1), and the action of the unit of Formula (2) are combined, and thus the continuous jetting property and the storage stability of the ink are improved.

(Structural unit represented by Formula (1))

The crosslinked pigment dispersion resin preferably contains at least one unit of Formula (1) (that is, structural unit represented by Formula (1)).

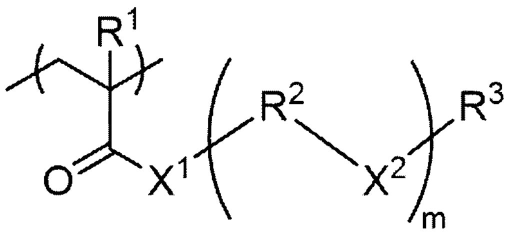

(1)

In Formula (1), $R^1$ represents a hydrogen atom or an alkyl group having 1 to 4 carbon atoms, $R^2$ represents an alkylene group having 2 to 5 carbon atoms, $R^3$ represents an aromatic group, $X^1$ and $X^2$ each independently represent -O- or -NH-, and m represents an integer of 2 or more.

In Formula (1), $R^1$ represents a hydrogen atom or an alkyl group having 1 to 4 carbon atoms.

$R^1$ is preferably a hydrogen atom or an alkyl group having 1 to 3 carbon atoms, more preferably a hydrogen atom, a methyl group, or an ethyl group, and still more preferably a hydrogen atom or a methyl group.

In Formula (1), $R^2$ represents an alkylene group having 2 to 5 carbon atoms.

$R^2$ is preferably an alkylene group having 2 to 4 carbon atoms, more preferably an alkylene group having 2 or 3 carbon atoms, and still more preferably an alkylene group having 2 carbon atoms.

In Formula (1), $R^3$ represents an aromatic group.

The aromatic group represented by $R^3$ includes at least one aromatic ring.

The aromatic ring in the aromatic group represented by $R^3$ may be a monocyclic ring or a polycyclic (for example, fused) ring.

The aromatic group represented by $R^3$ may include a group in which monocyclic rings are linked (for example, a biphenyl group).

The aromatic group represented by $R^3$ may include a heteroatom (for example, an oxygen atom).

The aromatic ring in the aromatic group represented by $R^3$ may have a substituent.

Examples of the substituent on the aromatic ring include a linear or branched hydrocarbon group (for example, a linear or branched alkyl group, a linear or branched alkenyl group, a linear or branched alkynyl group, and the like) having 1 to 30 carbon atoms (more preferably 1 to 20 carbon atoms), and a halogen atom.

The number of carbon atoms in the aromatic group represented by $R^3$ is preferably 4 to 30, more preferably 6 to 30, still more preferably 6 to 25, and even more preferably 6 to 20.

The aromatic group represented by $R^3$ is preferably a phenyl group, a naphthyl group, a furyl group, a biphenyl

group, or an alkylphenyl group having 7 to 30 carbon atoms (preferably 7 to 25 carbon atoms and more preferably 7 to 20 carbon atoms).

In Formula (1), $X^1$ and $X^2$ each independently represent -O- or -NH-.

It is preferable that $X^1$ and $X^2$ are -O-.

In Formula (1), m represents an integer of 2 or more.

m is preferably an integer of 2 to 30, more preferably an integer of 2 to 20, and still more preferably an integer of 2 to 10.

A content of the unit of Formula (1) is preferably 3% by mass to 80% by mass, more preferably 5% by mass to 70% by mass, still more preferably 10% by mass to 60% by mass, and even more preferably 10% by mass to 50% by mass with respect to the total amount of the crosslinked pigment dispersion resin.

The content of the unit of Formula (1) is preferably 3% by mass to 80% by mass, more preferably 5% by mass to 70% by mass, still more preferably 10% by mass to 60% by mass, and even more preferably 10% by mass to 50% by mass with respect to the total amount of portions in which the crosslinking structure is excluded from the crosslinked pigment dispersion resin.

The unit of Formula (1) can be formed by polymerization of a monomer for forming the unit of Formula (1).

The monomer for forming the unit of Formula (1) is the following monomer (1M).

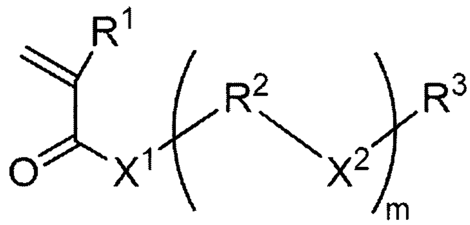

(1M)

$R^1$, $R^2$, $R^3$, $X^1$, $X^2$, -O-, -NH-, and m in the monomer (1M) respectively have the same meanings as $R^1$, $R^2$, $R^3$, $X^1$, $X^2$, -O-, -NH-, and m in Formula (1).

Specific examples of the monomer (1M) can be referred to examples section described later, in which examples of the monomer for forming the unit of Formula (1) are described.

A ratio (% by mass) of an added amount of the monomer (1M) to an added amount of all monomers in a case of producing the pigment dispersion resin corresponds to the content (% by mass) of the unit of Formula (1) with respect to the total amount of the pigment dispersion resin described above.

(Structural unit represented by Formula (2))

The crosslinked pigment dispersion resin preferably contains at least one unit of Formula (2) (that is, structural unit represented by Formula (2)).

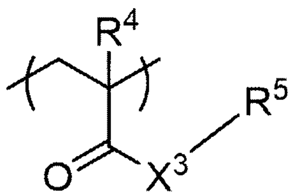

(2)

In Formula (2), $R^4$ represents a hydrogen atom or an alkyl group having 1 to 4 carbon atoms, $R^5$ represents an alkyl group having 8 or more carbon atoms, and $X^3$ represents -O- or -NH-.

In Formula (2), $R^4$ represents a hydrogen atom or an alkyl group having 1 to 4 carbon atoms.

$R^4$ is preferably a hydrogen atom or an alkyl group having 1 to 3 carbon atoms, more preferably a hydrogen atom, a methyl group, or an ethyl group, and still more preferably a hydrogen atom or a methyl group.

In Formula (2), $R^5$ represents an alkyl group having 8 or more carbon atoms.

$R^3$ is preferably an alkyl group having 8 to 50 carbon atoms, more preferably an alkyl group having 8 to 40 carbon atoms, still more preferably an alkyl group having 8 to 30 carbon atoms, even more preferably an alkyl group having 10 to 30 carbon atoms, and even still more preferably an alkyl group having 12 to 25 carbon atoms.

In Formula (2), $X^3$ represents -O- or -NH-.

$X^3$ is preferably -O-.

A content of the unit of Formula (2) is preferably 3% by mass to 80% by mass, more preferably 5% by mass to 70% by mass, still more preferably 10% by mass to 60% by mass, and even more preferably 10% by mass to 50% by mass with respect to the total amount of the crosslinked pigment dispersion resin.

The content of the unit of Formula (2) is preferably 3% by mass to 80% by mass, more preferably 5% by mass to 70% by mass, still more preferably 10% by mass to 60% by mass, and even more preferably 10% by mass to 50% by mass with respect to the total amount of portions in which the crosslinking structure is excluded from the crosslinked pigment dispersion resin.

The unit of Formula (2) can be formed by polymerization of a monomer for forming the unit of Formula (2).

The monomer for forming the unit of Formula (2) is the following monomer (2M).

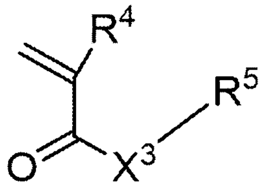 (2M)

$R^4$, $R^5$, and $X^3$ in the monomer (2M) respectively have the same meanings as $R^4$, $R^5$, and $X^3$ in Formula (2).

Specific examples of the monomer (2M) can be referred to examples section described later, in which examples of the monomer for forming the unit of Formula (2) are described.

A ratio (% by mass) of an added amount of the monomer (2M) to an added amount of all monomers in a case of producing the pigment dispersion resin corresponds to the content (% by mass) of the unit of Formula (2) with respect to the total amount of the pigment dispersion resin described above.

(Crosslinking structure)

In the ink according to the present disclosure, the crosslinked pigment dispersion resin can be formed by crosslinking the pigment dispersion resin.

The crosslinked pigment dispersion resin is preferably a reaction product of a pigment dispersion resin containing an acid group and a crosslinking agent. A crosslinking structure in this case is a structure formed by a reaction (for example, an acid-epoxy reaction) between the acid group and a crosslinkable group of the crosslinking agent (for example, an epoxy group in an epoxy compound).

In the present disclosure, the acid group is a concept including both an unneutralized acid group (for example, a carboxy group) and a neutralized acid group (for example, a salt of the carboxy group (for example, -C(=O)ONa)).

The neutralization will be described later.

The ink according to the present disclosure can be preferably produced by dispersing a pigment with a pigment dispersion resin containing an acid group to produce a dispersion (hereinafter, referred to as "uncrosslinked dispersion"), mixing the obtained uncrosslinked dispersion with a crosslinking agent, and reacting the acid group in the pigment dispersion resin of the uncrosslinked dispersion with the crosslinking agent. By this reaction, the acid group in the pigment dispersion resin and the crosslinking agent react with each other to form a crosslinking structure. It is considered that the reaction of forming the crosslinking structure proceeds in a state in which the pigment dispersion resin is adsorbed on the surface of the pigment. Therefore, it is considered that the crosslinking structure is formed, and thus an effect of making it difficult for the pigment dispersion resin to be released from the surface of the pigment is obtained.

-Crosslinking agent-

As the crosslinking agent, a compound having two or more reaction sites with the pigment dispersion resin (for example, a pigment dispersion resin containing at least one of a carboxy group or a salt thereof) is preferable.

A preferred combination of the crosslinking agent and the pigment dispersion resin is a combination of, as the crosslinking agent, a compound having two or more epoxy groups (that is, a bi- or higher functional epoxy compound) and, as the pigment dispersion resin, a pigment dispersion resin containing at least one of a carboxy group or a salt thereof.

In the above-described combination, a crosslinking structure is formed by a reaction between at least one of a carboxy group or a salt thereof in the pigment dispersion resin containing at least one of a carboxy group or a salt thereof and the epoxy group in the compound having two or more epoxy groups, and thus a crosslinked pigment dispersion resin having a crosslinking structure is formed.

The formation of such a crosslinking structure is preferably performed after the pigment is dispersed by the pigment dispersion resin containing at least one of a carboxy group or a salt thereof.

Specific examples of the bi- or higher functional epoxy compound, which is the preferred aspect of the

crosslinking agent, include ethylene glycol diglycidyl ether, polyethylene glycol diglycidyl ether, 1,6-hexanediol diglycidyl ether, diethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable.

As the crosslinking agent, a commercially available product can also be used.

As the commercially available product, for example, Denacol EX-321, EX-821, EX-830, EX-850, and EX-851 (manufactured by Nagase ChemteX Corporation), and the like can be used.

From the viewpoint of a crosslinking reaction rate and/or dispersion stability after the crosslinking, a molar ratio of a crosslinking site in the crosslinking agent (for example, the epoxy group) and a crosslinked site in the pigment dispersion resin (for example, the carboxy group or a salt thereof) [Crosslinking site in crosslinking agent (for example, epoxy group): Crosslinked site in pigment dispersion resin (for example, carboxy group or salt thereof)] is preferably 1:1.1 to 1:10, more preferably 1:1.1 to 1:5, and still more preferably 1:1.1 to 1:3.

(Pigment dispersion resin)

The pigment dispersion resin (that is, pigment dispersion resin before the crosslinking structure is formed) can also contain the unit of Formula (1) and the unit of Formula (2), similarly to the crosslinked pigment dispersion resin. The unit of Formula (1) and the unit of Formula (2) are not changed by the crosslinking structure-forming reaction, and can be maintained as they are even in the crosslinked pigment dispersion resin.

A preferred range of the content of the unit of Formula (1) with respect to the total amount of the pigment dispersion resin is the same as the preferred range of the content of the unit of Formula (1) with respect to the total amount of portions in which the crosslinking structure is excluded from the crosslinked pigment dispersion resin.

A preferred range of the content of the unit of Formula (2) with respect to the total amount of the pigment dispersion resin is the same as the preferred range of the content of the unit of Formula (2) with respect to the total amount of portions in which the crosslinking structure is excluded from the crosslinked pigment dispersion resin.

The pigment dispersion resin may further contain an acid group.

A crosslinking structure is formed by a reaction (for example, an acid-epoxy reaction) between the acid group and the crosslinking agent.

A part of the total number of acid groups in the pigment dispersion resin may also remain in the crosslinked pigment dispersion resin.

As described above, the acid group contained in the pigment dispersion resin may be a neutralized acid group or an unneutralized acid group.

The neutralized acid group is preferably a -C(=O)OM group (here, M represents an alkali metal ion, an ammonium ion, or an organic cation).

Examples of an organic cation include an alkylammonium cation having 1 to 10 carbon atoms, a hydroxy-substituted alkylammonium cation having 1 to 10 carbon atoms, a carboxy-substituted alkylammonium cation having 2 to 10 carbon atoms, and an organic cation having 2 to 10 alkyleneimine units having 2 to 4 carbon atoms.

The unneutralized acid group is preferably a carboxy group (-C(=O)OH group).

The neutralization of the acid group can be performed by reacting a base (hereinafter, also referred to as "neutralizing base") with an acid group-containing resin containing the unneutralized acid group.

Examples of the neutralizing base include alkali metal hydroxides such as sodium hydroxide and potassium hydroxide; ammonia; and organic amines such as dimethylethanolamine and diisopropylethylamine.

-Degree of neutralization-

In the pigment dispersion resin, it is preferable that 10% to 90% of the total number of acid groups contained are neutralized (that is, are salts of the acid groups).

In other words, in the pigment dispersion resin, a proportion of the neutralized acid group in the total number of the neutralized acid group and the unneutralized acid group (that is, number%; hereinafter, also referred to as "degree of neutralization (%)") is preferably 10% to 90%.

In a case where the degree of neutralization (%) is 10% to 90%, the crosslinking structure is more easily formed.

The degree of neutralization (%) is preferably 20% to 80% and more preferably 20% to 60%.

The degree of neutralization (%) is determined by neutralization titration.

-Acid group unit-

The pigment dispersion resin preferably contains a structural unit containing an acid group (hereinafter, also

referred to as "acid group unit").

As a monomer for forming the acid group unit, a compound containing an acid group and a polymerizable group is preferable.

As the polymerizable group, a group having an ethylenic double bond is more preferable, and a (meth)acryloyl group, an allyl group, a styryl group, or a vinyl group is still more preferable.

Specific examples of the monomer for forming the acid group unit include (meth)acrylic acid, β-carboxyethyl acrylate, fumaric acid, itaconic acid, maleic acid, and crotonic acid. Among these, (meth)acrylic acid is particularly preferable.

A content of the acid group unit is preferably 10% by mass to 70% by mass, more preferably 20% by mass to 60% by mass, and still more preferably 25% by mass to 50% by mass with respect to the total amount of the pigment dispersion resin.

-Acid value-

From the viewpoint of further improving the continuous jetting property and the storage stability of the ink, the pigment dispersion resin is preferably a resin in which at least a part of the acid groups in an acid group-containing resin having an acid value of 200 mgKOH/g to 350 mgKOH/g (more preferably 200 mgKOH/g to 350 mgKOH/g) (hereinafter, also referred to as "pigment dispersion resin before neutralization" or "pigment dispersion resin (before neutralization)") is neutralized.

-Other structural units-

The pigment dispersion resin may contain a structural unit other than the unit of Formula (1), the unit of Formula (2), and the acid group unit (hereinafter, also referred to as "other structural units").

However, the total proportion of the unit of Formula (1), the unit of Formula (2), and the acid group unit in the total amount of the pigment dispersion resin is preferably 70% by mass or more, more preferably 80% by mass or more, and still more preferably 90% by mass or more.

Examples of the other structural units include a structural unit derived from a vinyl monomer.

Examples of the vinyl monomer include methyl (meth)acrylate.

The other structural units in the pigment dispersion resin may also remain in the crosslinked pigment dispersion resin.

-Weight-average molecular weight (Mw) of pigment dispersion resin-

A weight-average molecular weight (Mw) of the pigment dispersion resin is not particularly limited, but from the viewpoint of dispersibility of the pigment, it is preferably 3,000 to 100,000, more preferably 5,000 to 80,000, still more preferably 10,000 to 60,000, and even more preferably 15,000 to 50,000.

In the present disclosure, the weight-average molecular weight (Mw) is measured by gel permeation chromatography (GPC). In the GPC, HLC-8220 GPC (manufactured by Tosoh Corporation) is used, three columns of TSKgeL Super HZM-H, TSKgeL Super HZ4000, and TSKgeL Super HZ2000 (all trade names manufactured by Tosoh Corporation) are used as columns while being connected in series, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index detector is used. In addition, the calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

In the above-described uncrosslinked dispersion, a ratio of the content of the pigment and the content of the pigment dispersion resin based on mass is preferably 1:0.04 to 1:3, more preferably 1:0.05 to 1:1, and still more preferably 1:0.05 to 1:0.5.

The pigment dispersion resin can be produced by a known method of copolymerizing each monomer (that is, the monomer for forming the unit of Formula (1), the monomer for forming the unit of Formula (2), the monomer for forming the acid group unit, and the like) for forming each structural unit, and then neutralizing the copolymer.

<Surfactant>

It is preferable that the ink according to the present disclosure contains at least one surfactant.

As a result, the image quality of the image is further improved.

Examples of the surfactant include a silicone-based surfactant, an acetylene glycol-based surfactant, and a polyoxyethylene alkyl ether-based surfactant.

It is preferable that the ink according to the present disclosure contains at least one silicone-based surfactant.

As a result, the image quality of the image is further improved.

It is preferable that the silicone-based surfactant is a compound having a polysiloxane structure in the molecule.

Examples of the silicone-based surfactant include a compound in which an organic group is introduced into a part of dimethylpolysiloxane.

The organic group is introduced into a side chain, one terminal, both terminals, or both a side chain and a terminal of dimethylpolysiloxane.

Examples of the dimethylpolysiloxane into which the organic group is introduced include modified silicone compounds such as amine-modified silicone, alcohol-modified silicone, polyether-modified silicone, and long-chain alkyl-modified silicone.

Among these, from the viewpoint of improving the jettability of the ink, it is preferable that the silicone-based surfactant is a polyether-modified silicone.

It is preferable that the silicone-based surfactant is a compound having a molecular weight of 200 to 2,000 and having a structure represented by Formula (4).

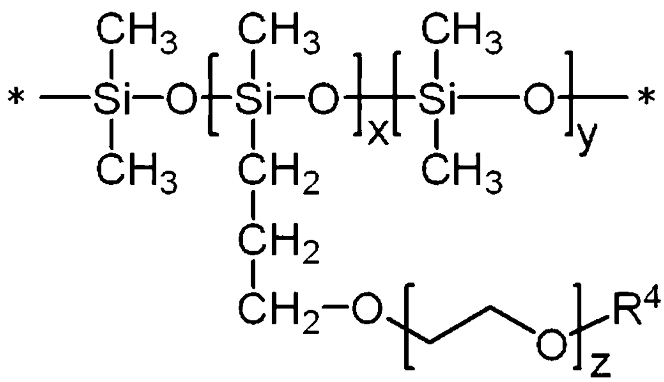

(4)

In Formula (4), $R^4$ represents a hydrogen atom or an alkyl group having 1 to 4 carbon atoms, and x, y, and z each independently represent an integer of 1 or more. * represents a bonding position with another structure in the molecule.

In Formula (4), $R^4$ is preferably a hydrogen atom or a methyl group.

The molecular weight of the silicone-based surfactant is 200 to 2,000, preferably 400 to 1,800. Since the silicone-based surfactant having a molecular weight of 200 to 2,000 is likely to be aligned at the interface, the jettability is improved.

The silicone-based surfactant preferably has water solubility.

As a result, the image quality of the image is further improved.

In the present disclosure, the "water solubility" means a property that 1 g or more of a substance is dissolved in 100 g of water at 25°C.

As the silicone-based surfactant, a commercially available product may be used.

Examples of the commercially available product of the silicone-based surfactant include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all manufactured by BYK-Chemie GmbH); and KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Evonik Industries AG).

A content of the surfactant is preferably 0.03% by mass to 3.0% by mass, more preferably 0.1% by mass to 3.0% by mass, still more preferably 0.1% by mass to 2.0% by mass, and even more preferably 0.1% by mass to 1.0% by mass with respect to the total amount of the ink.

<Other components>

The ink according to the present disclosure may contain other components.

As the other components, for example, additives such as a solid wetting agent (for example, urea), a water-soluble resin, an ultraviolet absorber, an antioxidant, a fading inhibitor, a conductive salt, and a basic compound (pH adjuster) may be contained.

Regarding the components which can be contained in the ink, known documents such as JP2015-193729A and JP2016-069487A can be appropriately referred to.

<Physical properties>

A pH (25°C) of the ink according to the present disclosure is preferably 7 to 10 and more preferably 7.5 to 9.5.
The pH is measured at 25°C using a pH meter, such as a pH meter (model number "HM-31 ") manufactured by DKK-Toa Corporation.
A viscosity (30°C) of the ink according to the present disclosure is preferably 0.5 mPa·s to 30 mPa·s, more preferably 2 mPa·s to 20 mPa·s, still more preferably 2 mPa·s to 15 mPa·s, and even more preferably 3 mPa·s to 10 mPa·s.
The viscosity is a value measured at 25°C using a viscometer. The viscosity is measured at 25°C using a viscometer, for example, a TV-22 type viscometer manufactured by Toki Sangyo Co., Ltd.
A surface tension (25°C) of the ink according to the present disclosure is preferably 60 mN/m or less, more preferably 20 mN/m to 50 mN/m, and still more preferably 30 mN/m to 45 mN/m.
The surface tension is measured at 25°C using a surface tension meter, for example, by a plate method using an automatic surface tension meter (product name "CBVP-Z") manufactured by Kyowa Interface Science Co., Ltd.

<Example of method for producing ink (production method A)>

An example of a method for producing the ink according to the present disclosure (hereinafter, referred to as a production method A) will be described below.
The production method A includes:

- a step of producing the unit of Formula (1), the unit of Formula (2), and the acid group-containing resin containing an acid group;
- a step of neutralizing at least a part of the total number of acid groups in the produced acid group-containing resin with the base to obtain a pigment dispersion resin;
- a step of dispersing a pigment with the pigment dispersion resin in water to obtain an uncrosslinked dispersion containing water, the pigment, and the pigment dispersion resin;
- a step of reacting the pigment dispersion resin in the uncrosslinked dispersion with the crosslinking agent to obtain a pigment dispersion containing water, the pigment, and a crosslinked pigment dispersion resin; and
- a step of adding, to the pigment dispersion, at least the above-described organic solvent A, the above-described organic solvent B, and the above-described resin particles (and as necessary, other components (for example, water, the surfactant, and the like)) to obtain the ink according to the present disclosure.

The neutralization of the acid group-containing resin for obtaining the pigment dispersion resin, and preferred aspects thereof are as described above.
The step of obtaining the uncrosslinked dispersion can be performed by a typical pigment dispersion method. Examples of a disperser used for the pigment dispersion include a ball mill, a roll mill, a sand mill, a beads mill, and a nanomizer.
The reaction between the pigment dispersion resin and the crosslinking agent (that is, the formation of the crosslinked pigment dispersion resin) in the step of obtaining the pigment dispersion, and preferred aspects thereof are as described above.
The total amount of the water, the pigment, and the crosslinked pigment dispersion resin in the total amount of the pigment dispersion is preferably 70% by mass or more, more preferably 80% by mass or more, and still more preferably 90% by mass or more.

[Image recording method]

The image recording method according to the present disclosure includes a step of applying the ink (that is, the ink jet ink) according to the present disclosure described above onto a recording medium by an ink jet method to record an image.
The image recording method according to the present disclosure may include other steps, as necessary.
In the image recording method according to the present disclosure, since the above-described ink according to the present disclosure is used, the same effects as the effects of the ink according to the present disclosure described above can be obtained.

<Step of recording image>

In the present step, the above-described ink according to the present disclosure is applied onto a recording medium by an ink jet method to record an image.

(Recording medium)

The recording medium is not particularly limited, and for example, so-called coated paper used for general offset printing or the like can be used.

The coated paper is formed by applying a coating material to a surface of high-quality paper or alkaline paper, which is mainly formed of cellulose and is not generally surface-treated, to provide a coating layer.

As the coated paper, commercially available coated paper can be obtained and used. For example, coated paper for general printing can be used; and specific examples thereof include coated paper (A2, B2) such as "OK TOPCOAT+" manufactured by Oji Paper Co., Ltd., and "Aurora Coat" and "Ulite" manufactured by NIPPON PAPER INDUSTRIES CO., LTD., and art paper (A1') such as "Tokubishi Art" manufactured by MITSUBISHI PAPER MILLS LIMITED.

In the image recording method according to the present disclosure, a low water absorption recording medium or a non-water absorbent recording medium can be used.

In the present disclosure, the low water absorption recording medium refers to a recording medium having a water absorption coefficient Ka of 0.05 $mL/m^2 \cdot ms^{1/2}$ to 0.5 $mL/m^2 \cdot ms^{1/2}$, preferably 0.1 $mL/m^2 \cdot ms^{1/2}$ to 0.4 $mL/m^2 \cdot ms^{1/2}$ and more preferably 0.2 $mL/m^2 \cdot ms^{1/2}$ to 0.3 $mL/m^2 \cdot ms^{1/2}$.

In addition, the non-water absorption recording medium refers to a recording medium having a water absorption coefficient Ka of less than 0.05 $mL/m^2 \cdot ms^{1/2}$.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from the difference in amount of water transfer between the contact time of 100 ms and the contact time of 900 ms, using an automatic scanning absorptometer KM500Win (manufactured by KUMAGAI RIKI KOGYO Co., Ltd.).

As the non-absorbent recording medium, a resin substrate is preferable. Examples of the resin substrate include a substrate obtained by molding a thermoplastic resin into a sheet shape.

The above-described resin substrate preferably includes polypropylene, polyethylene terephthalate, nylon, polyethylene, or polyimide.

The resin substrate may be a transparent resin substrate or a colored resin substrate, or at least a part thereof may be subjected to a metal vapor deposition treatment.

A shape of the resin substrate is not particularly limited, but a sheet-like resin substrate is preferable; and from the viewpoint of productivity of a printed material, a sheet-like resin substrate with which a roll can be formed by winding is more preferable.

(Application of ink)

In the present step, the ink according to the present disclosure is applied onto the recording medium by an ink jet method to record an image.

The ejection method of the ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the recording medium by the ink jet recording method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

However, the method of the ink jet head in the image recording method according to the present disclosure is not

limited to the line method, and may be a shuttle method. In any method applied, the effect of the image recording method according to the present disclosure is exhibited.

The present step may be performed using an ink jet head having an ink recirculation channel in an ink supply system.

This type of the ink jet head is available from FUJIFILM Dimatix, Inc.

It is preferable that the ink jet head includes a nozzle plate and a liquid-repellent film provided on the nozzle plate.

The liquid-repellent film preferably contains a fluorine compound.

The fluorine compound contained in the liquid-repellent film is preferably a compound having a fluorinated alkyl group.

Examples of the nozzle plate include nozzle plates described in paragraphs 0206 to 0214, and FIGS. 3 and 4 of JP2013-223958A, and nozzle plates described in FIG. 1C of JP2008-544852A.

The ink is preferably applied using an ink jet head having a resolution of 300 dpi or more (more preferably 600 dpi or more and still more preferably 800 dpi or more). Herein, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

(Heating and drying of ink)

In the present step, the ink according to the present disclosure, which has been applied onto the recording medium, may be heated and dried to obtain the image, as necessary.

As the heating and drying method, a known method, for example, heating and drying with a hot plate, hot air drying, heating and drying with a heating furnace, and the like can be adopted.

It is preferable that a heating unit in the heating and drying includes a non-contact heating unit which heats the surface of the recording medium onto which the ink is applied in a non-contact manner, and a contact heating unit which is in contact with a back side of the surface of the recording medium onto which the ink is applied.

In a case where a drying furnace is used for the heating and drying, a temperature in the drying furnace is preferably set to 80°C to 140°C.

It is preferable that the present step is performed using an ink jet recording device which records the image by the ink jet method while transporting the recording medium at a transportation speed of 30 m/min to 100 m/min.

Such an ink jet recording device is suitable for industrial applications in which high-speed printing is required.

(Ink set and pretreatment step)

The image recording method according to the present disclosure may be performed using an ink set containing the ink according to the present disclosure and a pretreatment liquid for aggregating the ink.

The pretreatment liquid preferably contains water and an aggregating agent (for example, a polyvalent metal compound, an organic acid, or the like).

In a case where the image recording method according to the present disclosure is performed using the above-described ink set, a pretreatment step of applying the above-described pretreatment liquid onto the recording medium can be provided before the above-described step of recording the image. In this case, in the step of recording the image, the ink is applied onto the region on the recording medium, onto which the pretreatment liquid has been applied, to record the image.

## Examples

Hereinafter, the present disclosure will be described in more detail using Examples. However, the present disclosure is not limited to the following examples as long as it does not exceed the gist of the present invention.

<Synthesis of pigment dispersion resin>

Pigment dispersion resins d1 to d6 were synthesized as pigment dispersion resins.

(Synthesis of pigment dispersion resin d1)

153.5 parts by mass of tripropylene glycol monomethyl ether (product name "MFTG", manufactured by NIPPON EMULSIFIER CO., LTD.) as a reaction solvent was charged into a reaction container equipped with a gas introduction pipe, a thermometer, a condenser, and a stirrer, and the inside of the reaction container was replaced with nitrogen gas.

Next, the inside of the reaction container was heated to 85°C, and a mixture of 76.8 parts by mass of MFTG as a

reaction solvent, 26 parts by mass of phenoxy diethylene glycol acrylate (Ph(EO)$_2$A) as a monomer for forming the unit of Formula (1), 34 parts by mass of stearyl methacrylate (STMA) as a monomer for forming the unit of Formula (2), 37 parts by mass of methacrylic acid (MAA) as a monomer for forming the acid group unit, 3 parts by mass of methyl methacrylate (MMA) as another monomer, and 3 parts by mass of V-601 (manufactured by FUJIFILM Wako Pure Chemical Corporation) as a polymerization initiator was added dropwise thereto over 3 hours to carry out a polymerization reaction. After completion of the dropwise addition, the mixture was further reacted at 85°C for 4 hours to obtain a solution containing a polymer (that is, an acid group-containing resin).

After cooling the obtained solution to room temperature, 251 parts by mass of a 1 mol/L NaOH aqueous solution was added thereto to neutralize 40% of the total number of carboxy groups in the polymer (that is, the acid group-containing resin) (that is, the polymer was neutralized at a degree of neutralization of 40%), thereby obtaining a solution of a pigment dispersion resin d1.

Table 1 shows the type and amount (part by mass) of the monomer added for forming the pigment dispersion resin; the degree of neutralization (%) of the pigment dispersion resin; the ClogP of the pigment dispersion resin (after neutralization); the acid value [mgKOH/g] of the pigment dispersion resin (before neutralization) (that is, the acid value of the acid group-containing resin); and the weight-average molecular weight (Mw) of the pigment dispersion resin (before neutralization).

In the classification of the monomers in Table 1, "Formula (1)", "Formula (2)", "Acid group", and "Others" respectively indicates the monomer for forming the unit of Formula (1), the monomer for forming the unit of Formula (2), the monomer for forming the acid group unit, and other monomers.

As described above, the ClogP of the pigment dispersion resin (after neutralization) was determined by weight-averaging of ClogP of the respective monomers corresponding to the respective structural units in the pigment dispersion resin (after neutralization) according to a copolymerization mass ratio.

(Synthesis of pigment dispersion resins d2 to d6)

Pigment dispersion resins d2 to d6 were synthesized as pigment dispersion resins in the same manner as in the synthesis of the pigment dispersion resin d1, except that the blending formulation of the monomer (the type and amount of the monomer added) was changed as shown in Table 1.

The pigment dispersion resin d6 was a comparative pigment dispersion resin having a ClogP of less than 3.2.

[Table 1]

| No. | Pigment dispersion resin | | | | | | | | | | | | | |
|---|---|---|---|---|---|---|---|---|---|---|---|---|---|---|
| | Type of monomer | | | | | Added amount of monomer (part by mass) | | | | | Degree of neutralization (%) | ClogP (after neutralization) | Acid value [mgKOH/g] (before neutralization) | Weight-average molecular weight (Mw) (before neutralization) |
| | Formula (1) | Formula (2) | Acid group | Others 1 | Others 2 | Formula (1) | Formula (2) | Acid group | Others 1 | Others 2 | | | | |
| d1 | $Ph(EO)_2A$ | STMA | MAA | MMA | - | 26 | 34 | 37 | 3 | - | 40 | 3.9 | 240 | 30000 |
| d2 | $NPh(PO)_5A$ | STMA | MAA | MMA | - | 19 | 31 | 48 | 2 | - | 40 | 4.3 | 311 | 32000 |
| d3 | $OPhPh(EO)_2A$ | STMA | AA | MMA | - | 20 | 30.4 | 41 | 8.6 | - | 40 | 3.4 | 318 | 28000 |
| d4 | $OPhPh(EO)_2A$ | STMA | AA | MMA | - | 20 | 40.4 | 21 | 18.6 | - | 40 | 4.8 | 163 | 26000 |
| d5 | $OPhPh(EO)_2A$ | STMA | AA | MMA | - | 20 | 31.5 | 46 | 2.5 | - | 40 | 4.8 | 638 | 32000 |
| d6 (comparative) | - | - | AA | St | $\alpha$-MeSt | - | - | 31 | 64.5 | 4.5 | 40 | 1.6 | 240 | 33000 |

Abbreviations and structures of the monomers in Table 1 are as follows.

NPh(PO)$_5$A: nonylphenoxypentapropylene glycol acrylate

OPhPh(EO)$_2$A: orthophenylphenoxyethylene glycol acrylate

Ph(EO)$_2$A: phenoxydiethylene glycol acrylate

STMA: stearyl methacrylate

MAA: methacrylic acid

AA: acrylic acid

MMA: methyl methacrylate

St: styrene

α-MeSt: α-methylstyrene

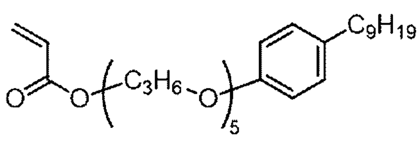

NPh(PO)$_5$A

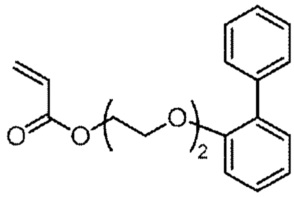

OPhPh(EO)$_2$A

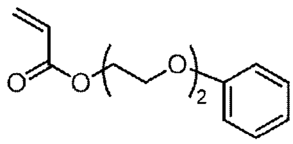

Ph(EO)$_2$A

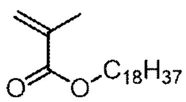

STMA

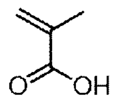

MAA

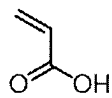

AA

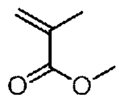

MMA

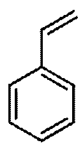

St

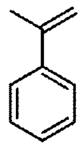

α-MeSt

[Example 1]

<Production of uncrosslinked dispersion>

A mixture having the following formulation was pre-dispersed to be uniform, and then subjected to a dispersion treatment for 3 hours using a beads mill (bead diameter: 0.1 mmφ, zirconia beads). In this manner, an uncrosslinked dispersion in which the magenta pigment was dispersed with the pigment dispersion resin d1 which was the pigment dispersion resin was obtained.

-Formulation of uncrosslinked dispersion-

· Pigment Red 122 (hereinafter, also referred to as "PR-122") (magenta pigment as a quinacridone pigment) ... 20.4

parts by mass
· Solution of pigment dispersion resin d1 ... 35.8 parts by mass
· MFTG ... 6.1 parts by mass
· Water ... 73.7 parts by mass

<Production of crosslinked dispersion>

Next, a mixture having the following formulation was reacted at 70°C for 6 hours and cooled to 25°C to crosslink the pigment dispersion resin d1 in the uncrosslinked dispersion with a crosslinking agent, thereby obtaining a crosslinked dispersion containing a crosslinked pigment dispersion resin, the magenta pigment, and water.

-Formulation-

· Uncrosslinked dispersion ... 136.0 parts by mass
·"Denacol EX-321" (manufactured by Nagase ChemteX Corporation, trimethylolpropane polyglycidyl ether; crosslinking agent) ... 3.0 parts by mass

<Production of pigment dispersion as target product>

Next, the crosslinked dispersion was subjected to ultrafiltration by being allowed to flow through an ultrafiltration device (crossflow-type ultrafilter (UF), manufactured by Sartorius AG) equipped with a polyether sulfone (PESU) membrane (size of micropores: 0.1 μm) at a flow rate of 600 mL per minute. At this time, the liquid temperature was adjusted to 25°C, and the ultrafiltration was performed 10 times by setting 1 time of the volume magnification of the charged liquid as 1 time. Thereafter, deionized water was added thereto such that a concentration of the pigment was 15% by mass.
As a result, a pigment dispersion (hereinafter, referred to as "pigment dispersion A") as a target product was obtained.

<Preparation of ink>

The pigment dispersion A and other components were mixed to prepare an ink having the following formulation.

-Formulation of ink-

· Pigment Red 122 ("PR-122" in Table 2) (magenta pigment as a quinacridone pigment) ... 5% by mass
· Crosslinked pigment dispersion resin d (that is, pigment dispersion resin having a crosslinking structure) ... 1.5% by mass
· Diethylene glycol monoethyl ether ("DEGmEE" in Table 2) (organic solvent A) ... 8.0% by mass ("S(A)" in Table 2)
· Propylene glycol ("PG" in Table 2) (organic solvent B) ... 20.0% by mass ("S(B)" in Table 2)
· BYK-345 (silicone-based surfactant manufactured by BYK Chemie) ... 0.4% by mass
· Acrylic resin particles (solid content (acrylic resin particles) in acrylic resin particle dispersion "Neocryl A-1105" manufactured by DSM) ... 1.7% by mass
· Water ... remaining amount set such that total amount of the formulation was 100% by mass

Table 2 shows a part of the above-described formulation.

The amount of each component in Table 2 means % by mass with respect to the total amount of the ink.
Table 2 further shows the ClogP of the organic solvent A; the ClogP of the organic solvent B; "-1.5D(A) + 9" and "-2D(A) + 8" in a case where the absolute value of the difference between the ClogP value of the organic solvent A and -0.5 is denoted by D(A); "45D(B) + 8" and "20D(B) + 8" in a case where the absolute value of the difference between the ClogP value of the organic solvent B and -0.5 is denoted by D(B); and S(A)/S(B).
These values are values related to the following expression (1), expression (2), and expression (3).

$$\text{Expression (1): } -1.5D(A) + 9 > S(A) > -2D(A) + 8$$

$$\text{Expression (2): } 45D(B) + 8 > S(B) > 20D(B) + 8$$

$$\text{Expression (3): } S(A)/S(B) > 0.25$$

<Image recording>

A printer head (GELJET (registered trademark) GX5000) manufactured by Ricoh Co., Ltd. was prepared, and the ink prepared above was loaded into a storage tank connected to the printer head.
Next, the printer head was fixedly disposed such that a direction of a line head in which nozzles were arranged was inclined by 75.7 degrees with respect to a direction orthogonal to a movement direction of a stage.
A recording medium (OK TOPCOAT+ manufactured by Oji Paper Co., Ltd.) was prepared, and while the recording medium was moved in the movement direction of the stage at a constant speed, the ink was jetted from the nozzles of the printer head, and the ink was applied to a region of 140 mm x 50 mm on the recording medium. The ink was applied under conditions of an ink droplet amount of 2 pL, a jetting frequency of 25.5 kHz, and a resolution of 1200 dpi × 1200 dpi.
Immediately after the application of the ink, the recording medium onto which the ink was applied was placed on a hot plate at 70°C in a direction in which a surface onto which the ink was not applied (that is, a surface opposite to the surface onto which the ink was applied) and the hot plate were in contact with each other, and the ink on the recording medium was dried with hot air at 120°C for 10 seconds using a dryer.
In this manner, an image was recorded on the recording medium to obtain an image recorded material.

<Evaluation>

The following evaluations were performed on the above-described ink and the above-described image.
The results are shown in Table 2.

(Image quality)

An image having a recording duty of 80% was recorded on the above-described recording medium according to the operation of the image recording described above.
Graininess (presence or absence of granular quality) of the obtained image was visually observed, and image quality was evaluated according to the following evaluation standard.
In the following evaluation standard, the rank at which the image quality was most excellent is 5.

-Evaluation standard for image quality-

5: granular quality was not confirmed by observing the image from a position separated by 5 cm.
4: granular quality was confirmed by observing the image from a position separated by 5 cm, but granular quality was not confirmed by observing the image from a position separated by 10 cm.
3: granular quality was confirmed by observing the image from a position separated by 10 cm, but granular quality was not confirmed by observing the image from a position separated by 15 cm.
2: granular quality was confirmed by observing the image from a position separated by 15 cm, but granular quality was not confirmed by observing the image from a position separated by 20 cm.
1: granular quality was confirmed by observing the image from a position separated by 20 cm.

(Continuous jetting property of ink)

Continuous jetting property of the ink was evaluated as follows.
The above-described ink was continuously jetted 600 billion times at 25.7 kHz from the nozzles of the printer head described above, and then a line image of 75 dpi x 2400 dpi was recorded on the above-described recording medium according to the operation of the image recording described above. The ink was jetted for recording the line image using 96 nozzles of all the nozzles of the printer head at a jetting frequency of 25.7 kHz.
Using a dot analyzer DA-6000 manufactured by Oji Scientific Instruments, a center position of the line image and a deviation amount from a theoretical position of the center position were measured for each of the line images obtained

above. Based on the obtained results, a standard deviation σ of the deviation amount was calculated.

Based on the obtained σ and the following evaluation standard, the continuous jetting property of the ink was evaluated.

In the following evaluation standard, the rank at which the continuous jetting property of the ink was most excellent is 5.

-Evaluation standard for continuous jetting property of ink-

5:

$$\sigma < 3\ \mu m$$

4:

$$3\ \mu m \leq \sigma < 5\ \mu m$$

3:

$$5\ \mu m \leq \sigma < 7\ \mu m$$

2:

$$7\ \mu m \leq \sigma < 9\ \mu m$$

1:

$$9\ \mu m \leq \sigma$$

(Storage stability of ink)

Storage stability of the ink was evaluated as follows.

The above-described ink was accommodated in an airtight container made of Teflon (registered trademark), and left to stand in a constant temperature chamber at 50°C for 2 weeks.

A viscosity of the ink before and after the above-described storage test was measured, and a rate of change in viscosity of the ink was calculated based on the following expression.

Rate of change in viscosity of ink = (Viscosity of ink after storage test)/(Viscosity of ink before storage test)

Here, the viscosity of the ink was measured at a temperature of 30°C using a VISCOMETER TV-22 (manufactured by TOKI SANGYO CO., LTD.).

As the rate of change in viscosity of the ink is closer to 1.0, the storage stability of the ink is higher. Therefore, in the following evaluation standard, the rank at which the storage stability of the ink was most excellent is 5.

-Evaluation standard for storage stability of ink-

5: rate of change in viscosity was less than 1.1.
4: rate of change in viscosity was 1.1 or more and less than 1.2.
3: rate of change in viscosity was 1.2 or more and less than 1.3.
2: rate of change in viscosity was 1.3 or more and less than 1.4.
1: rate of change in viscosity was 1.4 or more.

[Examples 2, 3, 12, and 13, and Comparative Example 4]

The same operation as in Example 1 was performed except that the pigment dispersion resin d1 was changed to the pigment dispersion resin shown in Table 2.
The results are shown in Table 2.

[Examples 4 to 6 and Comparative Examples 1 to 3]

The same operation as in Example 1 was performed except that the combination of the type of the organic solvent A, the amount of the organic solvent A (that is, S(A)), the type of the organic solvent B, and the amount of the organic solvent B (that is, S(B)) was changed as shown in Table 2.
The results are shown in Table 2.
Meanings of abbreviations of the organic solvents in Table 2 are as follows.

DEGmEE: diethylene glycol monoethyl ether
PG: propylene glycol
EGmHE: ethylene glycol monohexyl ether
TPGmME: tripropylene glycol monomethyl ether
3M1,3-BD: 3-methyl-1,3-butanediol
PG: propylene glycol
1,3BD: 1,3-butanediol
GL: glycerin

In Comparative Example 1, 1,3-butanediol (10% by mass with respect to the total amount of the ink) and glycerin (20% by mass with respect to the total amount of the ink) were used as the organic solvent B.
In Comparative Example 1, as the ClogP of the organic solvent B in the expression (2), a weighted average value of ClogP (-0.72) of the 1,3-butanediol and ClogP (-1.54) of the glycerin was used. S(B) corresponds to the total amount of the 1,3-butanediol and the glycerin (30% by mass with respect to the total amount of the ink).

[Example 7]

The same operation as in Example 1 was performed except that the ink did not contain the surfactant.
The results are shown in Table 2.

[Example 8]

The same operation as in Example 1 was performed except that the type and amount of the surfactant were changed as shown in Table 2.
The results are shown in Table 2.
In Table 2, "E1010" is OLFINE E1010 (acetylene glycol-based surfactant) manufactured by Nissin Chemical Co., Ltd.

[Example 9]

The same operation as in Example 1 was performed except that PR122 which is a quinacridone pigment was changed to Pigment Red 150 (PR150) which is a non-quinacridone pigment (azo pigment).
The results are shown in Table 2.

[Example 10]

The same operation as in Example 1 was performed except that the acrylic resin particles were changed to urethane resin particles having the same mass.
The results are shown in Table 2.
The ink of Example 10 was prepared using "PERMARIN UA-368" (aqueous dispersion of polycarbonate-based urethane resin particles) manufactured by SANYO CHEMICAL INDUSTRIES, LTD.

[Example 11]

The same operation as in Example 1 was performed except that the amount of the acrylic resin particles was changed as shown in Table 2.

The results are shown in Table 2.

[Table 2]

| | Ink (amount of each component means % by mass) | | | | | | | | | | | | | | | | | | | Evaluation | | |
|---|---|---|---|---|---|---|---|---|---|---|---|---|---|---|---|---|---|---|---|---|---|---|
| | Pigment | Pigment dispersion resin | | | Organic solvent A | | | | | Organic solvent B | | | | | S(A)/S(B) | Surfactant | | Resin particles | | | | |
| | Type | Type | ClogP (after neutralization and before crosslinking) | Acid value (before neutralization) (mgKOH/g) | Type | ClogP | 1.5D(A)+9 | S(A) | -2D(A)+8 | Type | ClogP | 15D(B)+f | S(B) | 20D(B)+8 | | Type | Amount | Type | Amount | Image quality | Continuous jetting property | Storage stability |
| Example 1 | P-R-122 | dl | 3.9 | 240 | DEGmEE | -0.4 | 8.8 | 8.0 | 7.8 | PG | -1.1 | 33 | 20 | 19 | 0.40 | BYK345 | 0.4 | Acrylic | 1.7 | 5 | 4 | 4 |
| Example 2 | PR-122 | d2 | 4.3 | 311 | DEGmEE | -0.4 | 8.8 | 8.0 | 7.8 | PG | -1.1 | 33 | 20 | 19 | 0.40 | BYK345 | 0.4 | Acrylic | 1.7 | 5 | 5 | 5 |
| Example 3 | PR-122 | d3 | 3.4 | 318 | DEGmEE | -0.4 | 8.8 | 8.0 | 7.8 | PG | -1.1 | 33 | 20 | 19 | 0.40 | BYK345 | 0.4 | Acrylic | 1.7 | 5 | 3 | 3 |
| Example 4 | PR-122 | d1 | 3.9 | 240 | DEGmEE | -0.4 | 8.8 | 8.5 | 7.8 | PG | -1.1 | 33 | 28 | 19 | 0.30 | BYK345 | 0.4 | Acrylic | 1.7 | 4 | 4 | 4 |
| Example 5 | PR-122 | d1 | 3.9 | 240 | EGmHE | 1.9 | 5.4 | 5.3 | 3.2 | PG | -1.1 | 33 | 20 | 19 | 0.27 | BYK345 | 0.4 | Acrylic | 1.7 | 4 | 3 | 3 |
| Example 6 | PR-122 | d1 | 3.9 | 240 | TPGm-ME | 0.0 | 8.3 | 7.5 | 7.1 | PG | -1.1 | 33 | 24 | 19 | 0.31 | BYK345 | 0.4 | Acrylic | 1.7 | 4 | 4 | 4 |
| Example 7 | PR-122 | d1 | 3.9 | 240 | DEGmEE | -0.4 | 8.8 | 8.0 | 7.8 | PG | -1.1 | 33 | 20 | 19 | 0.40 | - | - | Acrylic | 1.7 | 3 | 5 | 5 |
| Example 8 | PR-122 | d1 | 3.9 | 240 | DEGmEE | -0.4 | 8.8 | 8.0 | 7.8 | PG | -1.1 | 33 | 20 | 19 | 0.40 | E1010 | 1.5 | Acrylic | 1.7 | 4 | 4 | 4 |
| Example 9 | PR-150 | d1 | 3.9 | 240 | DEGmEE | -0.4 | 8.8 | 8.0 | 7.8 | PG | -1.1 | 33 | 20 | 19 | 0.40 | BYK345 | 0.4 | Acrylic | 1.7 | 5 | 3 | 3 |
| Example 10 | PR-122 | d1 | 3.9 | 240 | DEGmEE | -0.4 | 8.8 | 8.0 | 7.8 | PG | -1.1 | 33 | 20 | 19 | 0.40 | BYK345 | 0.4 | Urethane | 1.7 | 3 | 3 | 4 |
| Example 11 | PR-122 | d1 | 3.9 | 240 | DEGmEE | -0.4 | 8.8 | 8.0 | 7.8 | PG | -1.1 | 33 | 20 | 19 | 0.40 | BYK345 | 0.4 | Acrylic | 0.4 | 4 | 5 | 5 |
| Example 12 | PR-122 | d4 | 48 | 163 | DEGmEE | -0.4 | 8.8 | 8.0 | 7.8 | PG | -1.1 | 33 | 20 | 19 | 0.40 | BYK345 | 0.4 | Acrylic | 1.7 | 5 | 3 | 3 |

(continued)

| | Ink (amount of each component means % by mass) | | | | | | | | | | | | | | | | | | | Evaluation | | |
|---|---|---|---|---|---|---|---|---|---|---|---|---|---|---|---|---|---|---|---|---|---|---|
| | Pigment | Pigment dispersion resin | | | Organic solvent A | | | | | Organic solvent B | | | | | S(A)/S(B) | Surfactant | | Resin particles | | | | |
| | Type | Type | ClogP (after neutralization and before crosslinking) | Acid value (before neutralization) (mgKOH/g) | Type | ClogP | 1.5D(A)+9 | S(A) | -2D(A)+8 | Type | ClogP | 15D(B)+f | S(B) | 20D(B)+8 | | Type | Amount | Type | Amount | Image quality | Continuous jetting property | Storage stability |
| Example 13 | P-R-122 | d5 | 48 | 356 | DEGmEE | -0.4 | 8.8 | 8.0 | 7.8 | PG | -1.1 | 33 | 20 | 19 | 0.40 | BYK345 | 0.4 | Acrylic | 1.7 | 5 | 3 | 3 |
| Comparative Example 1 | PR-122 | d1 | 3.9 | 240 | 3M1,3-BD | -0.3, | 8.7 | 7.5 | 7.7 | 1,3BD/-GL | -1.27 | 42 | 25 | 23 | 0.30 | BYK345 | 0.4 | Acrylic | 1.7 | 1 | 4 | 4 |
| Comparative Example 2 | PR-122 | d1 | 3.9 | 240 | DEGm-HE | 1.9 | 5.6 | 5.2 | 3.5 | PG | -1.1 | 33 | 16 | 19 | 0.33 | BYK345 | 0.4 | Acrylic | 1.7 | 1 | 4 | 4 |
| Comparative Example 3 | PR-122 | d1 | 3.9 | 240 | DEGm-HE | 1.9 | 5.6 | 3.6 | 3.5 | PG | -1.1 | 33 | 20 | 19 | 0.18 | BYK345 | 0.4 | Acrylic | 1.7 | 1 | 4 | 4 |
| Comparative Example 4 | PR-122 | d6 | 1.6 | 240 | DEGmEE | -0.4 | 8.8 | 8.0 | 7.8 | PG | -1.1 | 33 | 20 | 19 | 0.40 | BYK345 | 0.4 | Acrylic | 1.7 | 4 | 1 | 1 |

As listed in Table 2, in Examples 1 to 13 in which an ink containing water, the organic solvent A having a ClogP value of -0.5 or more, the organic solvent B having a ClogP value of less than -0.5, the resin particles, the pigment, and the crosslinked pigment dispersion resin obtained by crosslinking the pigment dispersion resin having a ClogP value of 3.2 or more, and satisfying the expression (1) ("-1.5D(A) + 9 > S(A) > -2D(A) + 8"), the expression (2) ("45D(B) + 8 > S(B) > 20D(B) + 8"), and the expression (3) ("S(A)/S(B) > 0.25") were used, the image quality of the recorded image, the continuous jetting property of the ink, and the storage stability of the ink were excellent.
Contrary to Examples, Comparative Examples had the following results.
In Comparative Example 1 in which the ink not satisfying the expression (1) was used, the image quality was deteriorated.
In Comparative Example 2 in which the ink not satisfying the expression (2) was used, the image quality was deteriorated.
In Comparative Example 3 in which the ink not satisfying the expression (3) was used, the image quality was deteriorated.
In Comparative Example 4 in which the crosslinked pigment dispersion resin obtained by crosslinking the pigment dispersion resin having a ClogP value of less than 3.2 was used, the continuous jetting property of the ink and the storage stability of the ink were deteriorated.
The disclosure of Japanese Patent Application No. 2023-059326 filed on March 31, 2023 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

**1.** An ink jet ink, comprising:

water;
an organic solvent A having a ClogP value of -0.5 or more;
an organic solvent B having a ClogP value of less than -0.5;
resin particles;
a pigment; and
a crosslinked pigment dispersion resin obtained by crosslinking a pigment dispersion resin having a ClogP value of 3.2 or more,
wherein, in a case where

an absolute value of a difference between the ClogP value of the organic solvent A and -0.5 is denoted by D(A),
an absolute value of a difference between the ClogP value of the organic solvent B and -0.5 is denoted by D(B),
a content of the organic solvent A with respect to a total amount of the ink jet ink in units of % by mass is denoted by S(A), and
a content of the organic solvent B with respect to the total amount of the ink jet ink in units of % by mass is denoted by S(B),

the following expression (1), expression (2), and expression (3) are satisfied,

$$\text{the expression (1): } -1.5D(A) + 9 > S(A) > -2D(A) + 8,$$

$$\text{the expression (2): } 45D(B) + 8 > S(B) > 20D(B) + 8,$$

$$\text{the expression (3): } S(A)/S(B) > 0.25.$$

**2.** The ink jet ink according to claim 1, further comprising:
a silicone-based surfactant.

**3.** The ink jet ink according to claim 1,

wherein the pigment comprises a quinacridone pigment.

**4.** The ink jet ink according to claim 1,
wherein the resin particles comprise acrylic resin particles.

**5.** The ink jet ink according to claim 1,
wherein the pigment dispersion resin is a resin in which at least a part of acid groups in an acid group-containing resin having an acid value of 200 mgKOH/g to 350 mgKOH/g is neutralized.

**6.** An image recording method, comprising:
a step of applying the ink jet ink according to any one of claims 1 to 5 onto a recording medium by an ink jet method to record an image.

## INTERNATIONAL SEARCH REPORT

International application No.
**PCT/JP2024/009133**

### A. CLASSIFICATION OF SUBJECT MATTER

***C09D 11/322***(2014.01)i; ***B41J 2/01***(2006.01)i; ***B41M 5/00***(2006.01)i
FI: C09D11/322; B41M5/00 120; B41J2/01 501

According to International Patent Classification (IPC) or to both national classification and IPC

### B. FIELDS SEARCHED

Minimum documentation searched (classification system followed by classification symbols)

C09D11/322; B41J2/01; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2015-193729 A (TOYO INK SC HOLDINGS CO., LTD.) 05 November 2015 (2015-11-05) entire text | 1-6 |
| A | JP 2022-043715 A (TOYO INK SC HOLDINGS CO., LTD.) 16 March 2022 (2022-03-16) entire text | 1-6 |
| A | JP 2009-292900 A (FUJIFILM CORPORATION) 17 December 2009 (2009-12-17) entire text | 1-6 |
| A | WO 2022/203041 A1 (NIPPON KAYAKU KABUSHIKI KAISHA) 29 September 2022 (2022-09-29) entire text | 1-6 |
| A | WO 2022/070848 A1 (FUJIFILM CORPORATION) 07 April 2022 (2022-04-07) entire text | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 April 2024** | **07 May 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/009133**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/112816 A1 (NIPPON KAYAKU KABUSHIKI KAISHA) 22 June 2023 (2023-06-22)<br>entire text | 1-6 |

Form PCT/ISA/210 (second sheet) (July 2022)

**INTERNATIONAL SEARCH REPORT**
**Information on patent family members**

International application No.
**PCT/JP2024/009133**

| Patent document cited in search report | Publication date (day/month/year) | Patent family member(s) | Publication date (day/month/year) |
|---|---|---|---|
| JP 2015-193729 A | 05 November 2015 | (Family: none) | |
| JP 2022-043715 A | 16 March 2022 | (Family: none) | |
| JP 2009-292900 A | 17 December 2009 | (Family: none) | |
| WO 2022/203041 A1 | 29 September 2022 | EP 4316849 A1<br>entire text<br>CN 116997616 A | |
| WO 2022/070848 A1 | 07 April 2022 | US 2023/0227679 A1<br>entire text<br>EP 4223844 A1<br>CN 116249745 A | |
| WO 2023/112816 A1 | 22 June 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009019198 A
- JP 2015025076 A
- WO 2021192720 A
- JP 2002012607 A
- JP 2002188025 A
- JP 2003026978 A
- JP 2003342503 A
- JP 2015193729 A
- JP 5404669 B
- JP 2016069487 A
- JP 54059936 A
- JP 2003306623 A
- JP 2013223958 A
- JP 2008544852 A
- JP 2023059326 A


### Non-patent literature cited in the description


- JAPAN TAPPI Pulp and Paper Test Method No. 51:2000. Pulp and Paper Technology Association